# EUROPÄISCHE PATENTSCHRIFT

(11) **EP 3 243 642 B1**
(45) Veröffentlichungstag und Bekanntmachung des Hinweises auf die Patenterteilung: **25.11.2020**
(21) Anmeldenummer: 17170877.9
(22) Anmeldetag: 12.05.2017
(51) Int. Cl.: B29C 70/82, B29D 23/00, F16L 47/03

(54) **BEARBEITUNGSVORRICHTUNG FÜR ROHRENDEN**
PROCESSING DEVICE FOR PIPE ENDS
DISPOSITIF DE TRAITEMENT D'EXTREMITES DE TUBE

(30) Priorität: 13.05.2016 DE 102016005783
(43) Veröffentlichungstag der Anmeldung: 15.11.2017
(73) Patentinhaber: Stang GmbH, 46562 Voerde (DE)
(72) Erfinder: Ulrich, Josten, 46562 Voerde (DE)
(74) Vertreter: Demski, Siegfried

(56) Entgegenhaltungen:
- WO-A1-99/33619
- WO-A2-97/18412
- CN-A- 104 595 610

## Beschreibung

Die Erfindung betrifft eine Bearbeitungsvorrichtung für ein Rohrende zum Einpflügen eines Schweißdrahtes, umfassend zumindest einen Schneidkopf, welcher über eine Steuerungseinheit in einem Koordinatensystem bewegbar ist, wobei der Schneidkopf eine Drahtpflugschneide aufweist, welche entlang der Innen- oder Außenwandung eines feststehenden Rohrendes bewegbar ist und die Drahtpflugschneide in einem Arbeitsgang bis zu einer einstellbaren Tiefe radial in das Kunststoffmaterial des Rohrendes eindringt und das Kunststoffmaterial aufpflügt, einen zugeführten Schweißdraht eindrückt und über ein Andruckelement die Nut mit dem aufgepflügten Kunststoffmaterial wieder verschließt, wobei der Schneidkopf auf einem um 360° drehbaren Schneidkopfhalter gelagert ist, welcher eine radiale Ausrichtung der Drahtpflugschneide senkrecht zur Innen- oder Außenwandung bei einer Bewegung des Schneidkopfes vornimmt sowie ein Verfahren zur Bearbeitung eines Rohrendes.

Kunststoffrohre, die im Erdreich verlegt werden, dienen zur Wasserversorgung oder Entwässerung von Gebäuden und werden mit den Hausanschlüssen verbunden. Unterhalb der Fahrbahndecke werden die Kunststoffrohre in einem weit verzweigten Rohrnetz von Zuleitungs- und Entwässerungsrohren eingesetzt. Sowohl bei der Trinkwasserversorgung als auch beim Transport des Abwassers werden erhöhte Anforderungen an die Dichtigkeit derartiger Rohrnetze gestellt. Einerseits soll möglichst kein Verlust des Trinkwassers eintreten und eine Kontamination verhindert werden und andererseits soll ein Einsickern des Abwassers in das Erdreich verhindert werden. Aus diesem Grunde werden Kunststoffrohre eingesetzt, die an ihren jeweiligen Rohrenden miteinander verschweißt werden. Eine erste einfache Möglichkeit besteht darin, dass mithilfe von Heizplatten eine Stumpfverschweißung der Stirnflächen erfolgt. Dieses Verfahren lässt sich aber nur dann anwenden, wenn unter Druck die zu verschweißenden Rohrenden verpresst werden können. Alternativ werden Muffen eingesetzt, die jeweils über die Rohrenden geschoben werden, wobei eine Muffe für zwei Rohrenden vorgesehen ist und die Muffe mit den Rohrenden verschweißt wird. Eine Verschweißung kann in derart erfolgen, dass auf die Innenfläche der Muffe ein Schweißdraht eingearbeitet wird, der nach dem Zusammenschieben der Muffe mit den Rohrenden erhitzt wird, um auf diese Weise eine Verschweißung der Muffe mit dem Rohrende vorzunehmen. Hierzu ist es bekannt, dass ein Schweißdraht in eine eingeritzte Nut der Innenwand einer Muffe eingelegt und mit dem aufgeworfenen Kunststoffmaterial wieder verschlossen wird. Der Schweißdraht, welcher später mit Strom beaufschlagt wird, heizt sich in diesem Fall auf und führt dazu, dass die Kunststoffmaterialien schmelzen und nach dem Abkühlen eine feste und dauerhafte Verbindung zwischen Muffe und Rohrende eingehen.

Der Schweißdraht wird in einem solchen Fall mithilfe einer Vorrichtung in die Innenwandung der Muffen eingearbeitet, beispielsweise in eine eingeritzte Nut eingedrückt. Dieses Verfahren eignet sich besonders bei kurzen Muffenstücken, die ohne weiteres in einer sich drehenden Einspannvorrichtung aufgenommen werden können, sodass mithilfe eines Schneidkopfes die Nut in die Innenwandung eingearbeitet werden kann. Diese Möglichkeit besteht sowohl bei Halbschalen mit einem Überdeckungswinkel von 180° und bei Muffen mit einer 360° Überdeckung. Die Muffe wir hierbei mit ihrem Innendurchmesser an den Außendurchmesser der zu verschweißenden Rohrenden angepasst.

Als nachteilig ist die Verwendung von Muffen dadurch anzusehen, dass in jedem Fall zwei Schweißverbindungen hergestellt werden müssen, und zwar einerseits mit der Muffe und einem ersten Rohrende und andererseits mit der Muffe und einem zweiten Rohrende. Trotz sorgfältiger Bearbeitung der Innenfläche der Muffe und der Außenflächen der Rohrenden, kann hierbei nicht ausgeschlossen werden, dass durch Verunreinigungen die Schweißfläche der Rohrenden mit der Muffe nach dem Schweißvorgang Undichtigkeit aufweist. Mit jeder zusätzlichen Schweißnaht erhöhen sich diese Unsicherheiten, sodass prinzipiell möglichst wenige Schweißnähte oder -flächen zur Verbindung der Rohrenden eingesetzt werden sollten. Um die Bearbeitung der Muffen durchzuführen ist hierbei grundsätzlich vorgesehen, dass sich die Muffe während der Bearbeitung drehen muss. Diese Möglichkeit besteht bei relativ kurzen Muffen von ca. 50 cm bis 100 cm, weil bei derartigen Größen mit unterschiedlichen Rohrdurchmessern die Einspannung der Muffen problemlos erfolgen kann. Rohre mit einer Länge von mehreren Metern können auf diese Weise nicht bearbeitet werden, weil die Rohre in der Regel extrudiert werden und keine Rotationssymmetrie besitzen und gegebenenfalls eine Rohrkrümmung aufweisen.

Aus der WO 97/18412 A2 ist eine Bearbeitungsvorrichtung mit einem Heizelement bekannt, welches zum Einpflügen einer Nut in ein vorhandenes Kunststoffmaterial vorgesehen ist, wobei gleichzeitig ein Schweißdraht eingelegt und mithilfe einer Andruckvorrichtung in die Nut gepresst und diese verschlossen wird. Die dargestellte Bearbeitungsvorrichtung ist vorzugsweise zur Bearbeitung einer Innenfläche einer halbseitigen Muffe vorgesehen.

Die WO 99/33619 A1 offenbart eine Drahtverlegeeinrichtung, welche über einen Schneidkopf verfügt, der in einem Drehpunkt gelagert ist, sodass der Schneidkopf bei einer Drehrichtungsumkehr nachgeführt werden kann. Hierbei kann aber nicht ausgeschlossen werden, dass der Schneidkopf eine Eigenbewegung ausführt und die vorgesehene Schnittlinie verlässt, weil dieser um eine in einer im Mittelpunkt angeordneten Drehachse rotieren kann.

Die CN 104 595 610 offenbart einen vergleichbaren Schneidkopf, der um einen mittig gelagerten Drehpunkt gelagert ist, sodass auch in diesem Fall eine Ausrichtung des Schneidkopfes bei einer Drehrichtungsumkehr nicht ausreichend gewährleistet ist.

Der vorliegenden Erfindung liegt die Aufgabe zugrunde, eine neue Bearbeitungsvorrichtung für Rohrenden aufzuzeigen, welche einerseits die Nachteile der bekannten Vorrichtungen vermeidet und zusätzlich eine saubere Schnittführung des Schneidkopfes bei Drehrichtungsumkehr gewährleistet.

Erfindungsgemäß ist zur Lösung der Aufgabe vorgesehen, dass die Drahtpflugschneide um 360 Grad in einer Ebene drehbar gelagert ist, wobei der Drehpunkt der Drahtpflugschneide in Schneidrichtung vor der Drahtpflugschneide liegt oder dass der Schneidkopf mit Drahtpflugschneide mittels zumindest eines Antriebsmotors über 360 Grad drehbar gelagert in Einpflügrichtung bewegbar ist, wobei der Drehpunkt im Zentrum der Drahtpflugschneide liegt. Weitere vorteilhafte Ausgestaltungen des Erfindungsgedanken werden in den Unteransprüchen dargelegt.

Gegenüber bekannten Vorrichtungen zur Herstellung von Muffen für das Elektroschweißverfahren ist bei der erfindungsgemäßen Bearbeitungsvorrichtung keine Drehung des zu bearbeitenden Werkstückes erforderlich. Daher besteht die Möglichkeit, die Rohrenden eines längeren Rohres von beispielsweise 6 m Länge zur bearbeiten, was sonst aufgrund eines sich drehenden Rohres und einer vorhandenen Unwucht und fehlender Rotationssymmetrie mit Problemen verbunden ist. Ferner können unterschiedlichste Rohrdurchmesser bearbeitet werden, welche durch eine Klemmvorrichtung orts- und drehfest gehalten werden. Ein mögliches Schlagen des Rohres aufgrund von Herstellungstoleranzen, einer Unwucht oder fehlenden Rotationssymmetrie spielt daher keine Rolle. Das fest eingespannte Rohrende, welches von einer Idealform eines runden Rohres abweichen kann, wird durch die Klemmvorrichtung fixiert und in einem ersten Arbeitsgang die Stirnfläche plangefräst. In einem zweiten Arbeitsgang wird bis zu einer erforderlichen Tiefe die Innen- oder Außenseite des Rohrendes mit einer eingefrästen Ausnehmung ausgestattet, sodass eine ringförmige Geometrie vorliegt. In die Innen- oder Außenwandung der Ausnehmung wird in einem weiteren Arbeitsschritt mithilfe eines Schneidkopfes eine Nut eingepflügt, wobei das Kunststoffmaterial der Nut nicht herausgeschnitten, sondern aufgepflügt wird, sodass dieses zum späteren Verschließen der Nut wieder zu Verfügung steht. Gleichzeitig mit dem Einpflügen der Nut wird ein Schweißdraht in die Nut gedrückt und mithilfe eines Andruckelementes das aufgepflügte Kunststoffmaterial zum Verschließen der Nut verwendet.

Erfindungsgemäß ist der Schneidkopf über ein Drehlager auf dem Schneidkopfhalter gelagert ist, wobei der Drehpunkt vor der Drahtpflugschneide liegt. Durch diese Maßnahme wird erreicht, dass der Schneidkopf über einen Winkelbereich von 360° verdrehbar ist und bei einer Drehrichtungsänderung während des Bearbeitungsvorganges die Drahtpflugschneide gegenüber dem sich drehenden Schneidkopf einen Bogen beschreibt, welcher zu einer gebogenen Schweißdrahtrückführung führt. Die Drehung des Schneidkopfes erfolgt durch einen Versatz der Schneide hinter dem Drehpunkt.

Alternativ kann der Schneidkopf mittels zumindest eines Antriebsmotors über 360 Grad drehbar bewegt werden, wobei mithilfe des Antriebsmotors und der Steuerungseinheit jede beliebige Position des Schneidkopfes eingenommen werden kann und hierbei keine Beeinflussung durch die Bewegung des Schneidkopfes entlang der Innen- oder Außenwandung erfolgt. Auf diese Weise besteht somit die Möglichkeit auch Übergange zwischen konischen und zylindrischen Wandungen zu bearbeiten, weil der Schneidkopf durch den Antriebsmotor immer in die richtige Drehrichtung gedreht werden kann und damit der Übergang von einer zylindrischen zu einer konischen Fläche oder umgekehrt nicht zu einer unkontrollierten Bewegung des Schneidkopfes führt. Der Antriebsmotor ist hierbei über 360 Grad drehbar gelagert, sodass jede beliebige Einpflügrichtung ausgewählt werden kann und darüber hinaus während des Bearbeitungsvorganges eine kontinuierliche Nachführung des Schneidkopfes in die gewünschte Richtung möglich ist. In diesem speziellen Fall ist die Drahtpflugschneide im Zentrum des Drehpunktes gelagert und mittels des Antriebsmotors in Einpflügrichtung bewegbar. Durch diese Maßnahme können beispielsweise nicht nur Niederdruck- Entwässerungsrohre bearbeitet werden, sondern in der gleichen Bearbeitungsvorrichtung können ebenso Druckrohre bearbeitet werden, welche konische Übergänge aufweisen können.

Auf diese Weise kann der Schweißdraht in einer einstellbaren Tiefe positioniert werden, wobei der Schweißdraht durch das Verschließen der Nut mit dem aufgepflügten Material nicht nur gehalten, sondern mit dem Material des Rohrendes in der Nut verpresst wird. Auf diese Weise kann eine sichere Einbettung des Schweißdrahtes erfolgen.

Die Verlegung des Schweißdrahtes erfolgt hierbei in der Weise, dass der Schweißdraht durch eine erste Radialbohrung des Rohrendes nach außen geführt wird und unmittelbar neben der Radialbohrung das Einpflügen des Schweißdrahtes erfolgt, wobei beim Pflügen der ringförmigen Nuten ein größerer Abstand zwischen den Nuten gewählt wird, sodass nach einer erforderlichen Anzahl von Schweißdrahtwindungen eine Änderung der Drehrichtung des Schneidkopfes erfolgt, einhergehend mit einem Wendepunkt des Schweißdrahtes und einer Rückführung des Schweißdrahtes zwischen den bereits verschlossenen Nuten mit Schweißdraht bis in die Nähe der ersten Radialbohrung, sodass der Schweißdraht nach dem Durchtrennen durch eine zweite Radialbohrung ebenfalls nach außen geführt werden kann. Hierbei werden die beiden Schweißdrahtenden mit einer in das Rohrmaterial eingedrehten Kontaktbuchse verbunden, um mithilfe von speziellen Kontaktsteckern die spätere Strombeaufschlagung vorzunehmen. In der Regel werden hierbei vorzugsweise mindestens drei Windungen in einer ersten Drehrichtung des Schneidkopfes und entsprechende Anzahl von Windungen in entgegengesetzter Richtung mittels des Schneidkopfes in das Kunststoffmaterial des Rohrendes eingearbeitet. Es besteht jedoch ohne weiteres die Möglichkeit, die Anzahl der Windungen zu erhöhen oder gegebenenfalls zu reduzieren.

Erfindungsgemäß ist vorgesehen, dass der Schneidkopf eine Drahtpflugschneide aufweist, welche entlang der Innen- oder Außenwandung eines feststehenden Rohrendes bewegbar ist, wobei die Drahtpflugschneide in einem Arbeitsgang bis zu einer einstellbaren Tiefe radial in das Kunststoffmaterial des Rohrendes eindringt und das Rohrmaterial aufpflügt, einen zugeführten Schweißdraht eindrückt und über ein Andruckelement die Nut mit dem aufgepflügten Kunststoffmaterial wieder verschließt. Hierbei ist der Schneidkopf mit seiner Drahtpflugschneide auf einem um 360° drehbaren Schneidkopfhalter gelagert, sodass der Schneidkopf immer rechtwinkelig zur Innen- oder Außenwandung ausgerichtet werden kann. Somit wird eine gleichmäßige Nutenausbildung erreicht und darüber hinaus die Führung des Schneidkopfes entlang der Innen- oder Außenwandung des Rohrendes, insbesondere bei einer Drehrichtungsumkehr verbessert. Mithilfe des Andruckelementes kann das aufgepflügte Kunststoffmaterial wieder in die Nut zurückgedrückt und eingepresst werden, wobei gleichzeitig der Schweißdraht mit eingepresst wird. Als Andruckelement kann eine Andruckwalze, ein Gleitschuh oder ein balliges ausgeführtes Ende des Schneidkopfes verwendet werden.

Um das Schließen der Nuten zu erleichtern, ist hierbei vorgesehen, dass der Schneidkopf zwei V-förmig angeordnete Flächen aufweist, welche die Drahtpflugschneide bilden. Somit wird mithilfe des Schneidkopfes das Kunststoffmaterial des Rohrendes zu beiden Seiten aufgepflügt. Dadurch, dass an beiden Nuträndern damit das überschüssige Material angehäuft wird, kann dieses mithilfe des Andruckelementes von beiden Seiten in die Nut eingepresst werden, wodurch ein sicheres Verschließen gewährleistet wird. Ein einseitiges Aufwerfen würde dazu führen, dass beim Einpressen des Kunststoffmaterials die Nut teilweise nicht mehr vollständig verschlossen wird und damit die Gefahr besteht, dass der Schweißdraht aus der Nut hervorsteht.

In weiterer Ausgestaltung der Erfindung ist vorgesehen, dass die Bewegung des Schneidkopfes über die Steuerungseinheit mithilfe von drei Schlitten erfolgt, von denen ein erster und zweiter Schlitten rechtwinklig zueinander horizontal und ein dritter Schlitten vertikal bewegbar sind. Mithilfe der drei Schlitten, welche die Bewegung des Schneidkopfes innerhalb eines kartesischen Koordinatensystems ermöglichen, kann der Schneidkopf in einer horizontalen Ebene in zwei Richtungen bewegt werden und mithilfe eines dritten Schlittens kann eine vertikale Bewegung ausgeführt werden, sodass der Schneidkopf in einem vorhandenen Grenzbereich jeden Punkt im kartesischen Koordinatensystem erreichen kann. Der Grenzbereich wird hierbei durch die Schlittenlänge bestimmt, welche aber so bemessen ist, dass die Schlitten über den gesamten Durchmesser des Rohrendes sowohl horizontal als auch vertikal verfahrbar sind, wobei in diesem Fall der erste und dritte Schlitten dafür vorgesehen ist, während der zweite Schlitten horizontal bewegbar entlang des Rohrendes in Axialrichtung gefahren werden kann und damit den Abstand vom Rohrende bestimmt. Der Abstand hängt davon ab, wie viele Windungen des Schweißdrahtes erforderlich sind, wobei unter Berücksichtigung des Abstandes der einzelnen Windungen ein Abstand von 5 bis 15 cm ausreichend ist.

Alternativ besteht die Möglichkeit, die Bewegung des Schneidkopfes über die Steuerungseinheit mithilfe eines Roboters vorzunehmen, welcher als Mehrachs-Roboter zumindest einen Rotations- und einen Translationsfreiheitsgrad besitzt. Vorzugsweise werden Roboter mit mehreren Freiheitsgraden eingesetzt, um jeden gewünschten Zielpunkt innerhalb oder außerhalb einer Rohrwandung eines Rohrendes zu erreichen. Der Schneidkopf kann hierbei auf dem Roboterarm befestigt werden und mithilfe der Steuerungseinheit kann die Bewegung des Roboterarmes analog zur Bewegung mit zumindest drei Schlitten ausgeführt werden. Vorzugsweise verfügt der Roboterarm hierbei über zumindest drei Rotationsachsen und kann zusätzlich mithilfe eines Verschiebemechanismus zumindest eine Translationsbewegung ausführen. Auch wenn das Steuerungsprogramm hierbei anderen Kriterien unterliegt, so kann der Schneidkopf mithilfe des Roboterarms exakt an der Rohrinnen- oder Rohrau-ßenwand entlanggeführt werden und die gleiche Bewegung vollzogen werden, wie sie mithilfe der Schlitten durchgeführt werden kann. Soweit ein regulierbarer Anpressdruck gegen die Rohrinnen- oder Rohraußenwandung des Rohrendes erforderlich ist, kann dieser mithilfe des Roboterarmes durch eine Translationsbewegung des Schneidkopfes beeinflusst werden, wobei vorzugsweise ein gleichmäßiger Anpressdruck beabsichtigt ist.

Die Verwendung eines Roboterarms mit einem Schneidkopf stellt damit eine sinnvolle Alternative zu den drei erforderlichen Schlitten dar, wobei ebenfalls eine Bewegung innerhalb eines kartesischen Koordinatensystems zu jedem Zielpunkt erfolgen kann.

Zusätzlich ist der Schneidkopf auf einem Schneidkopfhalter gelagert, welcher über einen Antriebsmotor direkt oder über einen Antriebsmotor mit einem Getriebe eine radiale Ausrichtung des Schneidkopfes zur Wandung des Rohres ermöglicht, sodass der Schneidkopf entlang der Innen- oder Außenwandung des Rohrendes auch bei einer Drehrichtungsänderung einwandfrei geführt werden kann. Der Schneidkopfhalter besteht vorzugsweise aus einem Hohlzylinder, um den einzupflügenden Schweißdraht durch den Hohlzylinder hindurch zum Schneidkopf zu führen. Der Schweißdraht wird hierbei von einer Vorratsrolle abgewickelt, sodass eine kontinuierliche Zuführung gewährleistet ist.

Hierbei wird vorzugsweise mithilfe einer Steuerungseinheit der Schneidkopf mit Drahtpflugschneide entlang der Innen- oder Außenwandung einer zuvor hergestellten Ausnehmung geführt. Hierzu erfolgt eine Bearbeitung des Rohrendes, und zwar in der Form, dass die Stirnfläche stirnseitig geglättet wird und auf der Innen- oder Außenseite eine Ausnehmung gefräst wird, sodass eine definierte Innenfläche vorliegt, bevor der Schweißdraht eingepflügt wird. Dies ist deshalb erforderlich, weil beispielsweise extrudierte Kunststoffrohre keine 100%ige Symmetrieachse aufweisen und aufgrund des verwendeten Kunststoffmaterials zum Teil unrund ausgebildet sind. Durch die Bearbeitung des Rohrendes wird hierbei eine definierte Symmetrieachse geschaffen, wodurch gleichzeitig sichergestellt wird, dass in das Rohrende das korrespondierende Rohrstück mit seinem Rohrende eingeschoben werden kann. Zu diesem Zweck wird die diametral entgegengesetzte Innen- oder Außenfläche ebenfalls mit einem Fräser bearbeitet, um eine radiale Ausnehmung herzustellen, die in das Rohrende mit Schweißdraht eingeschoben werden kann.

Eine drehbare Lagerung des Schneidkopfes mit einem Drehpunkt vor der Drahtpflugschneide beziehungsweise als Alternative die Drehung des Schneidkopfes mithilfe eines Antriebsmotors kann sowohl bei den Schlitten als auch bei einem Roboterarm verwendet werden.

In der Regel werden die Drähte in eine zylindrische Fläche eingearbeitet. Die Erfindung ermöglicht aber ebenso, dass durch eine zusätzliche Achse der Schneidkopf senkrecht zu einer kegeligen Fügefläche geführt werden kann, sodass der Draht auch auf einer Schräge oder einer sich verändernder Geometrie eingearbeitet werden kann. Somit wird eine Schweißzone über eine sich verändernde Geometrie ermöglicht, die beispielsweise durch eine zylindrische oder konische Wandung vorgegeben ist. Dies ist insbesondere dann sinnvoll, wenn bei Druckrohren die Vorteile der Überschiebmuffe und die Vorteile der wandintegrierten Muffen miteinander kombiniert werden sollen.

Der Vorteil der Überschiebmuffe besteht darin, dass der Schweißbereich in der Wanddicke verstärkt wird, während der Vorteil der wandintegrierten Muffe darin besteht, dass nur eine Verschweißung auf der Baustelle benötigt wird.

Die Kombination dieser Verbindung besteht darin, dass der Draht in einer kegeligen wandintegrierten Muffe und zudem auch noch in einer zylindrischen aufbauenden Muffe eingepflügt werden kann. Die Vorteile bestehen weiter darin, dass nur eine Schweißung benötigt wird und durch die kegelige Muffe und das entsprechende kegelige Spitzende, die nicht immer rund in Rohre schneller ineinandergeschoben werden können. Zudem wird der Betriebsdruck der Rohrleitung zusätzlich im wandintegrierten Muffenbereich aufgenommen, sodass die verstärkende Überschiebemuffe dünnwandiger ausgeführt werden kann und Material demzufolge eingespart wird.

In weiterer Ausgestaltung der Erfindung ist vorgesehen, dass die Andruckkraft des Schneidkopfes auf die Rohrwandung in Abhängigkeit des Abstandes von der Rohrwandung über einen Korrekturfaktor festlegbar ist, oder dass der Schneidkopf mit einem Drucksensor ausgestattet ist und die Andruckkraft des Schneidkopfes durch die Steuerungseinheit regelbar ist. Mithilfe des Korrekturfaktors kann die Verformung des Rohrendes aufgrund der Andruckkraft ausgeglichen werden, um eine gleichbleibende Tiefe des einzupflügenden Drahtes zu gewährleisten. Alternativ besteht die Möglichkeit, dass der Schneidkopf mit einem Drucksensor ausgestattet ist, beispielsweise Dehnungsstreifen oder vergleichbare Drucksensoren, sodass in Abhängigkeit der gemessenen Andruckkraft der Schneidkopf durch die Steuerungseinheit bei einer eventuellen Verformung des Rohrendes nachgeführt werden kann. Diese Nachführung kann entweder mit einem Schlitten oder gegebenenfalls mit einer translatorischen Bewegung des Roboterarmes ausgeführt werden. Durch beide vorgenannten Varianten besteht somit die Möglichkeit den Schweißdraht in einer gleichbleibenden Tiefe in die Innen- oder Außenwandung einzupflügen.

In weiterer Ausgestaltung der Erfindung ist vorgesehen, dass die Zuführung des Schweißdrahtes von einer Vorratsrolle bis zum Schneidkopf erfolgt und der Schweißdraht durch einen Schlitz des Schneidkopfes hindurch geführt und hinter der Drahtpflugschneide unmittelbar in die eingepflügte Nut eingedrückt werden kann. Die hierbei vorgesehene Bearbeitung sieht vor, dass mit der Drahtpflugschneide das Kunststoffmaterial des Rohrendes zu beiden Seiten aufgeworfen wird und eine Nut entsteht, in der unmittelbar der Schweißdraht eingedrückt werden kann und darauf folgend mithilfe eines Andruckelementes die Nut wieder verschlossen wird. Auf diese Weise kann erreicht werden, dass der Draht sicher in dem Kunststoffmaterial verankert wird und darüber hinaus wird durch das Andruckelement eine Glättung der Innenwand erreicht, die das Einschieben der zweiten korrespondierenden Rohrenden erleichtert. Der Schweißdraht wird hierbei so in die Nut eingedrückt, dass dieser aus der Nut nicht mehr heraustreten kann.

Um den Schweißdraht möglichst sicher in der Nut zu verankern und eine Knickbildung oder Verwerfung in der Nut zu verhindern, ist im weiteren vorgesehen, dass hinter der Drahtpflugschneide ein Führungselement aus dem Schneidkopf herausragt, welches zur Führung des Schweißdrahtes vorgesehen ist und beispielsweise aus einem Federstahl besteht. Mithilfe des Führungselementes wird hierbei der Schweißdraht in die Nut eingedrückt, wobei das Führungselement in Richtung auf den Draht und die Drahtpflugschneide eine Krümmung aufweist, damit der Draht in die Nut eingedrückt werden kann.

In weiterer Ausgestaltung der Vorrichtung ist vorgesehen, dass eine Klemmvorrichtung für die Rohrenden vorgesehen ist, wobei die Klemmvorrichtung unterschiedliche Rohrdurchmesser aufnehmen und mit radial verstellbaren Spannbacken einklemmt oder dass die Klemmvorrichtung für unterschiedliche Rohrdurchmesser austauschbare Klemmbacken aufweist. Die Klemmvorrichtung ist hierbei so ausgeführt, dass unterschiedliche Rohrdurchmesser, beispielsweise von 20 bis 100 cm mit ein und derselben Vorrichtung bearbeitet werden können. Entweder können die hierbei vorgesehenen Spannbacken radial verstellbar ausgeführt sein und das Rohrende einklemmen oder es werden austauschbare Klemmbacken verwendet, welche an die unterschiedlichen Rohrdurchmesser angepasst sind.

Um die Stirnfläche und die Innen- bzw. Außenfläche des Rohrendes zu bearbeiten, ist ferner vorgesehen, dass die Vorrichtung mit zumindest einem Fräskopf ausgestattet ist, welcher zum Planfräsen der Stirnfläche und zum Einfräsen einer Ausnehmung auf der Innenseite des Rohrendes verwendet wird. Dieser Fräser ist ebenfalls über Schlitten gelagert und kann somit mithilfe der Steuerungsvorrichtung in dem kartesischen Koordinatensystem, ähnlich wie der Schneidkopf bewegt werden, sodass der Fräskopf jede Position innerhalb des kartesischen Koordinatensystems einnehmen kann.

Ferner ist die Vorrichtung mit einem Fräskopf oder einem Bohrer ausgestattet, um zwei Radialbohrungen vorzunehmen, durch welche die Drahtenden nach außen geführt werden können. Mit dem Durchführen der Drahtenden nach außen ist der Bearbeitungsvorgang nahezu abgeschlossen. Es fehlen nur noch die Kontaktbuchsen, welche von außen oder innen in die Bohrungen eingepresst werden können, sodass das Rohrende insoweit vorbereitet ist, dass es vor Ort mit einem korrespondierenden Rohrende verschweißt werden kann.

Des Weiteren wird ein Verfahren zur Bearbeitung eines Rohrendes durch eine Bearbeitungsvorrichtung aufgezeigt, umfassend zumindest einen Schneidkopf, welcher über eine Steuerungseinheit in einem Koordinatensystem bewegt wird, wobei der Schneidkopf aus einem Schneidkopfhalter und einer Drahtpflugschneide besteht, welche entlang der Innen- oder Außenwandung eines feststehenden Rohrendes bewegt wird und wobei die Drahtpflugschneide in einem Arbeitsgang bis zu einer einstellbaren Tiefe radial in das Kunststoffmaterial des Rohrendes eindringt und das Kunststoffmaterial aufpflügt, einen zugeführten Schweißdraht eindrückt und über ein Andruckelement die Nut mit dem aufgepflügten Kunststoffmaterial wieder verschließt, wobei der Schneidkopf auf einem um 360° drehbaren Schneidkopfhalter gelagert ist, welcher eine radiale Ausrichtung der Drahtpflugschneide senkrecht zur Innen- oder Außenwandung bei einer Bewegung des Schneidkopfes vornimmt, wobei die Bearbeitungsvorrichtung in einer Drehrichtung zumindest drei voneinander beabstandete Nuten einpflügt, den Schweißdraht eindrückt und gleichzeitig die Nuten wieder verschließt, wobei nach Vollendung der letzten Umdrehung ein Richtungswechsel mit einer Drehung des Schneidkopfes durch einen Drehpunkt der Drahtpflugschneide in Schneidrichtung vor der Drahtpflugschneide oder durch einen Antriebsmotor erfolgt und der Schneidkopf in entgegengesetzter Drehrichtung wiederum zwischen den vorherigen Nuten weitere Nuten einfräst, den Schweißdraht eindrückt und die Nut wieder verschließt.

Die Besonderheit der vorliegenden Erfindung besteht darin, dass mithilfe einer Bearbeitungsvorrichtung in einem Arbeitsdurchlauf eine Nut eingepflügt wird, der Schweißdraht eingepresst und die Nut wieder verschlossen werden kann, wobei die Vorrichtung in einer Drehrichtung zumindest drei voneinander beabstandete Nuten einpflügen kann und nach Vollendung der letzten Umdrehung ein Richtungswechsel mit einer Drehung des Schneidkopfes stattfindet und der Schneidkopf in der entgegengesetzter Drehrichtung wiederum zwischen den vorherigen Nuten weitere Nuten einpflügt, den Schweißdraht eindrückt und die Nut wieder verschließt. Dadurch, dass diese Bearbeitung vollautomatisch durchgeführt werden kann, wird eine äußert rationelle, insbesondere vollautomatische Bearbeitung ermöglicht, welche mit einer geringen Bearbeitungszeit verbunden ist und damit Kosten einspart. Des Weiteren kommt hinzu, dass ein Rohrstück einenends mit Schweißdraht ausgestattet wird, während anderenends eine korrespondierende radiale Ausnehmung hergestellt wird, die in den Absatz eines benachbarten Rohrendes eingeschoben oder aufgeschoben werden kann. Der besondere Vorteil besteht hierbei im Weiteren dadurch, dass lediglich eine Schweißnaht notwendig ist, die unmittelbar die beiden Rohrenden miteinander verbindet, während demgegenüber bei einer Muffenverbindung die Muffe jeweils mit einem Rohrende verschweißt werden muss. Durch diese Vorgehensweise wird eine deutliche Zeitersparnis erzielt, weil nur eine Schweißung erforderlich ist und darüber hinaus die Rohrenden in derart vorbereitet werden können, dass diese unmittelbar ineinander geschoben werden können.

Die Erfindung wird im Weiteren anhand der Figuren nochmals erläutert.

Es zeigt
- Fig. 1: in einer perspektivischen Detailansicht, die erfindungsgemäße Bearbeitungsvorrichtung mit Klemmvorrichtung, Schneidkopf und einem Montagegerüst,
- Fig. 2: eine erste Seitenansicht der Bearbeitungsvorrichtung,
- Fig. 3: eine weitere Ansicht mit Blick auf die Spannvorrichtung,
- Fig. 4: eine Seitenansicht mit Blick auf einen Fräskopf,
- Fig. 5.: eine Draufsicht auf die Bearbeitungsvorrichtung und
- Fig. 6: eine perspektivische Ansicht des Drahtpfluges mit einem zusätzlichen Antrieb für die Wickelverstellung.

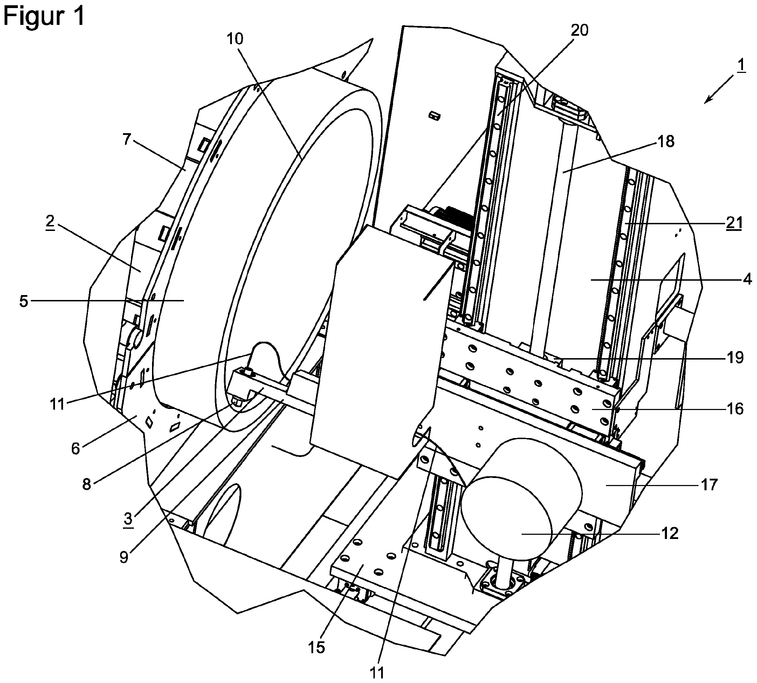

Figur 1 zeigt in einer perspektivischen Detailansicht die Bearbeitungsvorrichtung 1 mit einer Klemmvorrichtung 2, einem Schneidkopf 3 und einem Montagegerüst 4.

Die Klemmvorrichtung 2 dient zum Einspannen eines Rohrendes 5, welches durch die Klemmvorrichtung 2 in die Bearbeitungsvorrichtung 1 in Richtung auf das Montagegerüst 4 hineinragt. Das Rohr selbst kann hierbei eine Länge von mehreren Metern aufweisen, wobei nur sichergestellt werden muss, dass das Rohrende 5 zur weiteren Bearbeitung mithilfe der Klemmvorrichtung 2 sicher gehalten wird. Die Klemmvorrichtung 2 besteht im gezeigten Ausführungsbeispiel aus einem Klemmring, der aus einem feststehenden Unterteil 6 und einem schwenkbeweglichen Oberteil 7 besteht. Wenn das Oberteil 7 aufgeklappt ist, kann das Rohr mit seinem Rohrende 5 eingelegt werden und nach Verschließen des Oberteils 7 erfolgt die Verklemmung durch einen Kraft- und Formschluss. Zum Formschluss können hierbei Klemmenbacken vorgesehen werden, welche über den Umfang verteilt das Rohrende 5 erfassen und fixieren. Während des gesamten Bearbeitungsvorganges wird das Rohrende 5 dreh- und ortsfest gehalten.

Der Schneidkopf 3 besteht im Wesentlichen aus einer Drahtpflugschneide 8 und ist auf einem Schneidkopfhalter 9 gelagert, welcher um 360° drehbar ist. Die Drahtpflugschneide 8 ist ebenfalls um 360° in einer Ebene drehbar gelagert, wobei der Drehpunkt vor der Drahtpflugschneide 8 liegt. Der Schneidkopfhalter 9 ermöglicht durch seine Drehung hierbei, eine radiale Ausrichtung des Schneidkopfes 3 auf die Innen- oder Außenfläche des Rohrendes 5, wenn der Schneidkopfhalter 9 über die Schlitten sowohl vertikal als auch horizontal bewegt wird. Die Drehbewegung des Schneidkopfhalters 9 erfolgt über einen Elektromotor, gegebenenfalls mit Getriebeuntersetzung und wird durch eine Steuerungseinheit ebenso wie die einzelnen Schlitten gesteuert. Durch die Drehbarkeit des Schneidkopfes 3 auf dem Schneidkopfhalter 9 wird erreicht, dass bei einem Drehrichtungswechsel die Drahtpflugschneide 8 immer in Bearbeitungsdrehrichtung ausgerichtet ist. Der einzupflügene Schweißdraht 11 wird von einer Vorratsrolle 12 abgewickelt und durch einen Schlitz hindurch dem Schneidkopf 3 zugeführt, sodass in einem Bearbeitungsvorgang nicht nur das Aufpflügen der Innen- oder Außenwand in Umfangsrichtung erfolgen kann, sondern der Schweißdraht 11 sofort in diese Nut eingedrückt und mit einem balligen Ende des Schneidkopfes 3 der Nut wieder verschlossen werden kann. Durch den Schneidkopf 3 ist somit ein kontinuierliches Arbeiten möglich, und zwar das Pflügen und Eindrücken des Schweißdrahtes 11 sowie Verschließen mit gleichzeitigem Einpressen des Schweißdrahtes 11. Hierzu wird in die Innen- oder Außenfläche des Rohrendes 5 zunächst die Nut eingepflügt, dann der Schweißdraht 11 eingedrückt und die Nut wieder verschlossen, wobei der Schweißdraht 11 über mehrere Umdrehungen in einer Richtung eingepflügt wird, danach ein Richtungswechsel erfolgt und das Einpflügen des Schweißdrahtes 11 in entgegengesetzter Richtung bis zum Ausgangspunkt erfolgt, wo der Schweißdraht 11 abgeschnitten und durch eine zweite Radialbohrung nach außen geführt wird.

Das Montagegerüst 4 dient zur Aufnahme der Schlitten und ruht selbst auf einem Schlitten 15, der eine Bewegung des gesamten Montagegerüstes 4 horizontal ermöglicht, beispielsweise in Richtung der X-Achse, während demgegenüber ein zweiter Schlitten 16 eine vertikale Bewegung ermöglicht, beispielsweise in Richtung der Z-Achse und ein dritter Schlitten17 eine Bewegung in horizontaler Richtung ermöglicht, und zwar in diesem Fall in Richtung der Y-Achse. Mithilfe der drei Schlitten 15, 16, 17 ist somit die Möglichkeit gegeben, den Schweißkopf 8 in jede beliebige Position innerhalb eines kartesischen Koordinatensystems zu verfahren, wobei die maximale Bewegung durch die Schlittenlänge bestimmt wird. Der Antrieb der Schlitten 15, 16, 17 erfolgt vorzugsweise über eine Gewindespindel, die mithilfe eines Antriebsmotors in Drehungen versetzt wird und innerhalb eines Gewindeflansches geführt wird. Nur für den Schlitten 16 ist die Gewindespindel 18 erkennbar, während demgegenüber die weiteren Gewindespindeln verdeckt liegend angeordnet sind. Die Ansteuerung der Motoren für die Gewindespindel und damit der Schlitten 15, 16, 17 erfolgt über eine Steuerungseinheit, die auf der Rückseite des Montagegerüstes 4 befestigt ist oder neben dem Montagegerüst 4 aufgestellt wird. Durch die Steuerungseinheit und ein entsprechendes Programm kann hierbei mithilfe der drei Schlitten 15, 16, 17 der Schneidkopf 3 entlang eines Kreisbogens kontinuierlich auf der Innen- oder Außenwandung bewegt werden, um die wendelförmigen Nuten einzupflügen und danach sofort wieder nach dem Einlegen des Schweißdrahtes 11 zu verschließen. Hierbei besteht die Notwendigkeit sämtliche Schlitten, 15, 16, 17 und den Schneidkopfhalter mithilfe des Antriebmotors zu bewegen, wobei der Schneidkopf 3 beziehungsweise die Drahtpflugschneide 8 immer radial zur Innen- oder Außenwandung des Rohrendes ausgerichtet sind.

Um eine gleichmäßige synchrone Bewegung mithilfe der Schlitten, 15, 16, 17 auszuführen sind diese vorzugsweise auf zumindest zwei Linearführungen gelagert. Aus Figur 1 sind die Linearführungen 20, 21 des Schlittens 16 zu erkennen, entlang derer der Schlitten 16 mithilfe der Gewindespindel 18 bewegt wird. Die beiden weiteren Schlitten 15, 17 ruhen ebenfalls auf Linearführungen die jedoch aus dieser Ansicht nicht erkennbar sind.

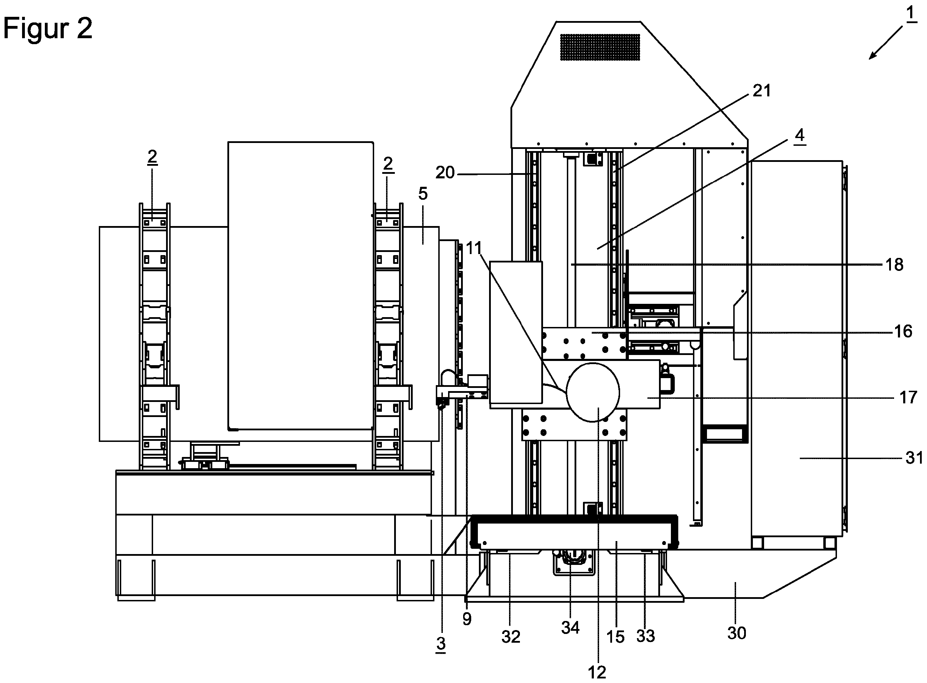

Figur 1 zeigt in einer perspektivischen Ansicht im Wesentlichen die Details in unmittelbarer Umgebung des Schneidkopfes 3, während die Figuren 2 bis 4 die gesamte Bearbeitungsvorrichtung 1 in mehreren Ansichten zeigen.

Figur 2 zeigt in einer ersten Seitenansicht die Bearbeitungsvorrichtung 1 mit ihrem Montagegerüst 4, der Klemmvorrichtung 2 und dem Schneidkopf 3. Die gesamte Bearbeitungsvorrichtung 1 ruht auf einem Bodengestell 30, welches zur Aufnahme der Klemmvorrichtung 2 und dem verfahrbaren Montagegerüst 4 vorgesehen ist, wobei zusätzlich eine Steuerungseinheit 31 ebenfalls auf dem Bodengestell 30 ruht, welche die Schlitten 15, 16, 17 sowie den Antriebsmotor des Schneidkopfhalters 9 steuert. Die Steuerungseinheit 31 ist hierbei unmittelbar neben den Gehäusen des Montagegerüstes 4 angeflanscht. Der Schlitten 15 ruht auf zwei Linearführungen 32, 33 und ist über eine Gewindespindel 34 verfahrbar. Ebenso ist der Schlitten 16 entlang der Linearführungen 20, 21 verfahrbar, wobei in diesem Fall eine Gewindespindel 18 vorgesehen ist, welche mithilfe eines Linearmotors in eine Links Rechts-Rotation versetzt werden kann, wobei an dem Schlitten 16 ortsfest und drehfest gehaltene Gewindemuffen befestigt sind, sodass durch eine Drehung der Gewindespindel 18 die entsprechende Bewegung in vertikaler Richtung des Schlittens 16 erfolgen kann.

Der Schlitten 17 ruht ebenfalls auf zwei Linearführungen die aus dieser Ansicht nicht ersichtlich sind. Der Schlitten 17 wird hierbei ebenso über eine Gewindespindel bewegt, wobei wiederum ein Linearmotor gegebenenfalls auch eine andere Motoreneinheit zur Vortrieb in horizontaler Richtung verwendet werden kann. An dem Schlitten 17 ist unmittelbar der Schneidkopfhalter 9 befestigt, welcher wiederum um 360 Grad verdrehbar ist, wobei in dem Gehäuse des Schlittens 17 der Antriebsmotor gegebenenfalls mit Getriebeuntersetzung eingebaut ist und ebenfalls von der Steuerungseinheit 31 angesteuert wird. Auf dem Schneidkopfhalter 9 sitzt der Schneidkopf 3 mit seiner Drahtpflugschneide 8. Der Schweißdraht 11 wird von einer Vorratsrolle 12 über den hohlwandigen Schneidkopfhalter 9 bis zum Schneidkopf 3 geführt, wobei der Schweißdraht 11 hinter der Drahtpflugschneide 8 durch einen Schlitz hindurch geführt wird, um den Schweißdraht 11 in die aufgepfügten Nuten einzudrücken. Quer in der Klemmvorrichtung 2 ist das Rohrende 5 eingeklemmt, welches zur Bearbeitung vorgesehen ist.

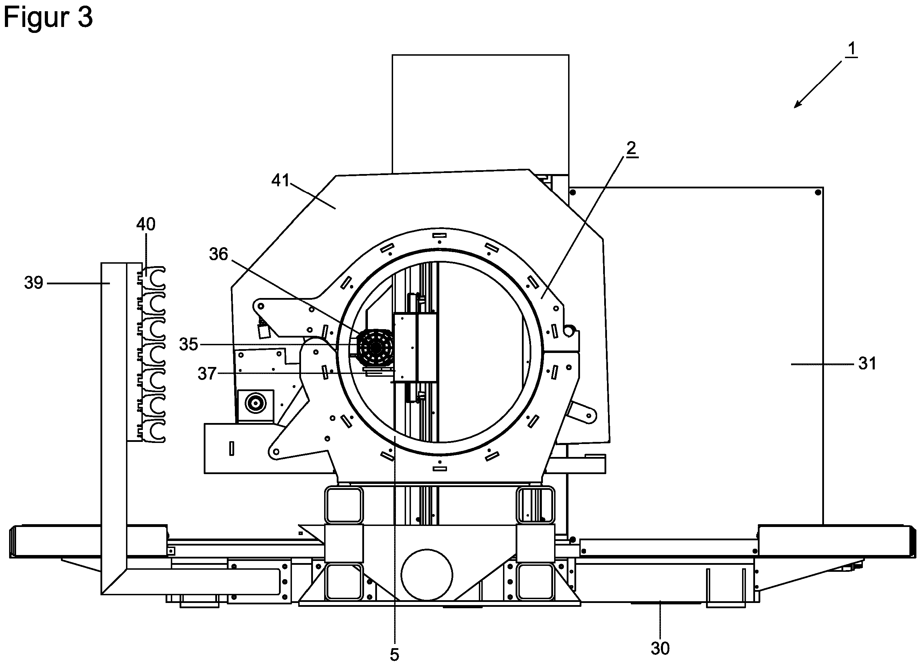

Figur 3 zeigt in einer weiteren Ansicht die Bearbeitungsvorrichtung 1 mit Blick auf die Klemmvorrichtung 2, in der das Rohrende 5 eingeklemmt ist. Der Schneidkopf 3 ist aus dieser Ansicht nicht ersichtlich, aber ein Fräsmotor 35 mit Fräskopf 36, welcher zur Bearbeitung einer Stirnfläche 10 und der Innen- beziehungsweise Außenwandung des Rohrendes vorgesehen ist. Der Fräsmotor 35 wird hierbei ebenfalls durch zwei Schlitten 37, 38 bewegt, wobei der Schlitten 37 eine horizontale Bewegung ermöglicht und der Schlitten 38 eine vertikale Bewegung. In Kombination mit dem Schlitten 15, auf dem das Montagegerüst 4 ruht, ist somit eine vertikale und horizontale Bewegung des Fräsmotors 35 möglich. Der Fräsmotors 35 mit seinem Fräskopf 36 ist hierbei auf einer Seite des Montagegerüstes 4 angeordnet, während der Schneidkopf 3 auf der gegenüberliegenden Seite des Montagegerüstes 4 angeordnet ist und in dieser Zeichnung verdeckt liegt. Eine Fräskopfwechselstation 39 mit Fräskopfhalter 40 dient zur Aufnahme alternativer Fräsköpfe 36, sodass ein vollautomatischer Wechsel der einzelnen Fräsköpfe 36 vorgenommen werden kann. Die Fräsvorrichtung und Schneidkopfvorrichtung ist durch eine Haube 41 geschützt, um das Bedienungspersonal vor herumfliegenden Spänen zu schützen und gleichzeitig einen möglichen Eingriff in den sich bewegenden Fräsmotor 35 mit Fräskopf 36 beziehungsweise Schneidkopf 3 zu verhindern.

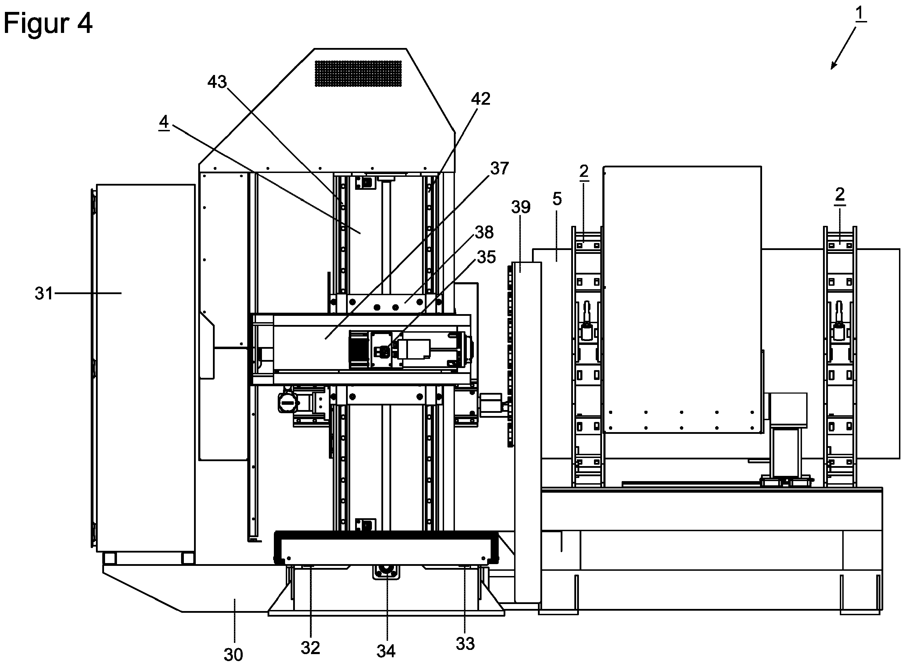

Figur 4 zeigt eine weitere Seitenansicht mit Blick auf den Fräsmotor 35, welcher mithilfe des Schlittens 37 horizontal verfahrbar ist, wobei der Schlitten 37 entlang zweier Linearführungen 42, 43 bewegbar ist.

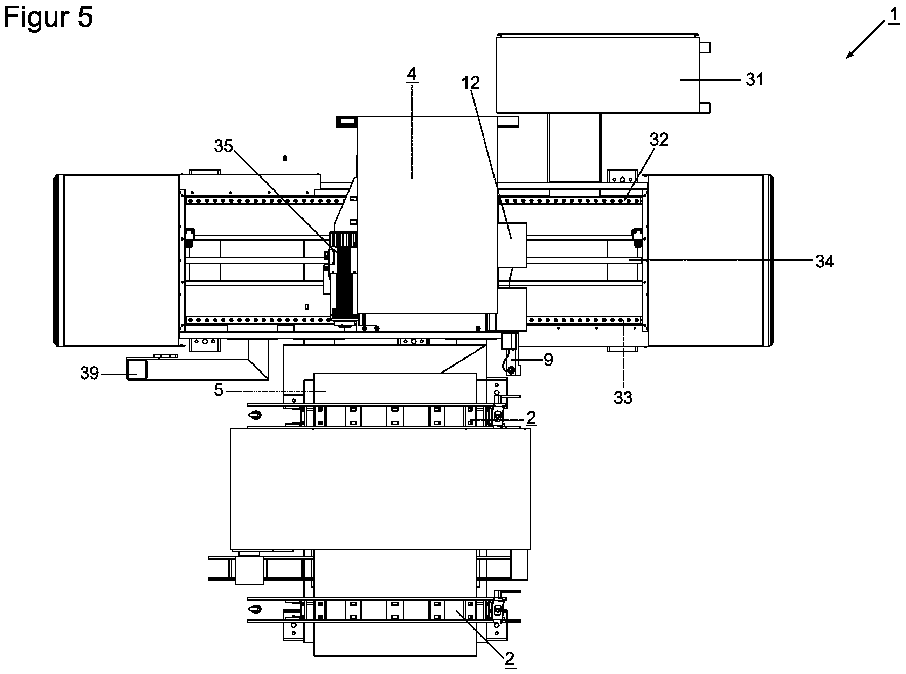

Figur 5 zeigt eine Draufsicht der Bearbeitungsvorrichtung 1 aus der insbesondere die Anordnung der einzelnen Komponenten ersichtlich ist. Die Klemmvorrichtung 2 dient zur Aufnahme des Rohrendes 5, welches nach hinten an der Klemmvorrichtung 2 herausragt und eine Länge von mehreren Metern aufweisen kann. Das Montagegerüst 4 ist hierbei zusammen mit einer Abdeckung die im vorliegenden Fall das Montagegerüst 4 verdeckt, mithilfe eines Schlittens 15 verfahrbar, wobei aus dieser Ansicht die Linearführungen 32, 33 ersichtlich sind. Mithilfe einer Gewindespindel 34 erfolgt die horizontale Bewegung des Schlittens 15. Aus dieser Ansicht wird insbesondere deutlich, dass zur einer Seite des Montagegerüstet 4 der Fräsmotor 35 angeordnet ist, während auf der gegenüberliegenden Seite die Vorratsrolle 12 mit Schneidkopfhalter 9 und Schneidkopf 3 angeordnet sind.

Die Bearbeitung des Rohrendes 5 erfolgt in der Weise, dass mithilfe des Fräsmotors 35 und einem Fräskopf 36 die Stirnfläche 10 des Rohrendes 5 zuerst bearbeitet wird und im Anschluss eine Ausnehmung auf der Außenwandung oder Innenwandung des Rohrendes 5 hergestellt wird, wobei diese Ausnehmung dafür vorgesehen ist, den Schweißdraht 11 mithilfe des Schneidkopfes 3 und des Schneidkopfhalters 9 einzupflügen. Der Schlitten 15 ermöglicht hierbei die Bewegung sowohl des Fräsmotors 35 als auch des Schneidkopfhalters 9 in einer ersten horizontalen Richtung, während der Schlitten 37 des Fräsmotors 35 beziehungsweise der Schlitten 17 des Schneidkopfhalters 9 die weitere Bewegung in horizontaler Richtung ermöglicht und darüber hinaus sowohl der Fräsmotor 35 als auch der Schneidkopfhalter 9 über einen weiteren Schlitten 38 beziehungsweise 16 vertikal bewegt werden kann.

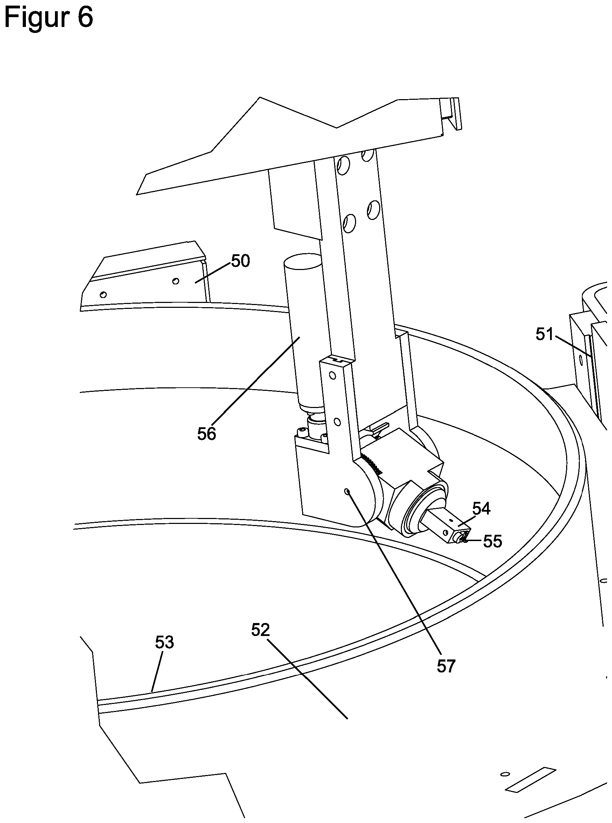

Figur 6 zeigt in einer perspektivischen Ansicht einen Teil der erfindungsgemäßen Bearbeitungsvorrichtung, und zwar zwei Klemmbacken 50, 51 zum Einspannen eines Rohrendes 52. Die Bearbeitung des Rohrendes 52 erfolgt in diesem Fall auf der Innenfläche 53 mithilfe eines Schneidkopfes 54 mit Drahtpflugschneide 55. Um eine Ausrichtung der Drahtpflugschneide 55 rechtwinklig zur Oberfläche, in diesem Fall der Innenwandung 53 des Rohrendes 52 zu gewährleisten ist der Schneidkopf 54 mithilfe eines Antriebsmotors 56 und einer Drehachse 57 gegenüber der Innenfläche 53 rechtwinklig ausrichtbar. Durch diese Maßnahme wird erreicht, dass die Drahtpflugschneide 55 immer rechtwinklig zur Einpflügfläche, in diesem Fall der Innenfläche 53 ausgerichtet ist.

Des Weiteren kann der Schneidkopf 54, beispielsweise mit einem Drucksensor ausgestattet werden und durch einen zusätzlichen Schiebemechanismus kann der Anpressdruck jederzeit bei einer möglichen plastischen Verformung des Rohrendes trotz vorhandener Einspannung nachgeregelt werden.

### Bezugszeichenliste

- 1: Bearbeitungsvorrichtung
- 2: Klemmvorrichtung
- 3: Schneidkopf
- 4: Montagegerüst
- 5: Rohrende
- 6: Unterteil
- 7: Oberteil
- 8: Drahtpflugschneide
- 9: Schneidkopfhalter
- 10: Stirnfläche
- 11: Schweißdraht
- 12: Vorratsrolle
- 15: Schlitten
- 16: Schlitten
- 17: Schlitten
- 18: Gewindespindel
- 20: Linearführung
- 21: Linearführung
- 30: Bodengestell
- 31: Steuerungseinheit
- 32: Linearführung
- 33: Linearführung
- 34: Gewindespindel
- 35: Antriebsmotor
- 36: Fräskopf
- 37: Schlitten
- 38: Schlitten
- 39: Fräskopfwechselstation
- 40: Fräskopfhalter
- 41: Haube
- 42: Linearführung
- 43: Linearführung
- 52: Rohrende
- 53: Innenwandung
- 54: Schneidkopf
- 55: Drahtpflugschneide
- 56: Antriebsmotor
- 57: Drehachse

## Patentansprüche

1. Bearbeitungsvorrichtung (1) für ein Rohrende (5, 52) zum Einpflügen eines Schweißdrahtes (11), umfassend zumindest einen Schneidkopf (3, 54), welcher über eine Steuerungseinheit (31) in einem Koordinatensystem bewegbar ist, wobei der Schneidkopf (3, 54) eine Drahtpflugschneide (8, 55) aufweist, welche entlang der Innen- oder Außenwandung eines feststehenden Rohrendes (5, 52) bewegbar ist und die Drahtpflugschneide (8, 55) in einem Arbeitsgang bis zu einer einstellbaren Tiefe radial in das Kunststoffmaterial des Rohrendes (5, 52) eindringt und das Kunststoffmaterial aufpflügt, einen zugeführten Schweißdraht (11) eindrückt und über ein Andruckelement die Nut mit dem aufgepflügten Kunststoffmaterial wieder verschließt, wobei der Schneidkopf (3, 54) auf einem um 360° drehbaren Schneidkopfhalter (9) gelagert ist, welcher eine radiale Ausrichtung der Drahtpflugschneide (8, 55) senkrecht zur Innen- oder Außenwandung bei einer Bewegung des Schneidkopfes (4, 54) vornimmt,
**dadurch gekennzeichnet,**
**dass** die Drahtpflugschneide (8, 55) um 360 Grad in einer Ebene drehbar gelagert ist, wobei der Drehpunkt der Drahtpflugschneide (8) in Schneidrichtung vor der Drahtpflugschneide (8) liegt oder dass der Schneidkopf (54) mit Drahtpflugschneide (55) mittels zumindest eines Antriebsmotors über 360 Grad drehbar gelagert in Einpflügrichtung bewegbar ist, wobei der Drehpunkt im Zentrum der Drahtpflugschneide (8, 55) liegt.

2. Bearbeitungsvorrichtung (1) nach Anspruch 1,
**dadurch gekennzeichnet,**
**dass** der Schneidkopf (3, 54) als Andruckelement eine Andruckwalze, einen Gleitschuh oder ein ballig ausgeführtes Ende aufweist, welches das aufgepflügte Kunststoffmaterial in die Nut zusammen mit dem Draht einpresst.

3. Bearbeitungsvorrichtung (1) nach Anspruch 1 oder 2
**dadurch gekennzeichnet,**
**dass** der Schneidkopf (3, 54) zwei V-förmig angeordnete Flächen zur Bildung einer Drahtpflugschneide (8, 55) und einen Schlitz für den Schweißdraht (11) aufweist.

4. Bearbeitungsvorrichtung (1) nach Anspruch 1 oder 3,
**dadurch gekennzeichnet,**
**dass** die Bewegung des Schneidkopfes (3, 54) über die Steuerungseinheit (31) mithilfe von mindestens drei Schlitten (15, 16, 17) erfolgt, von denen zumindest ein erster (15) und zweiter Schlitten (17) rechtwinklig zueinander horizontal und wenigstens ein dritter Schlitten (16) vertikal bewegbar sind, oder dass die Bewegung des Schneidkopfes (3, 54) über die Steuerungseinheit (31) mithilfe eines Roboters erfolgt, welcher als Mehrachs-Roboter zumindest einen Rotations- und einen Translationsfreiheitsgrad aufweist.

5. Bearbeitungsvorrichtung (1) nach Anspruch 1 oder 4,
**dadurch gekennzeichnet,**
**dass** der Schneidkopfhalter (9) direkt über einen Antriebsmotor oder indirekt über einen Antriebsmotor mit einem Getriebe eine radiale Ausrichtung des Schneidkopfes (3, 54) zur Wanderung des Rohrendes (5, 52) vornimmt.

6. Bearbeitungsvorrichtung (1) nach einem der Ansprüche 1 bis 5,
**dadurch gekennzeichnet,**
**dass** der Schneidkopfhalter (9) aus einem Hohlzylinder besteht, und/oder dass der Schneidkopf (3, 54) über ein Drehlager auf dem Schneidkopfhalter (9) gelagert ist.

7. Bearbeitungsvorrichtung (1) nach einem der Ansprüche 1 bis 6,
**dadurch gekennzeichnet,**
**dass** die Steuerungseinheit (31) den Schneidkopf (3) mit Drahtpflugschneide (8) entlang der Innen- oder Außenwandung der hergestellten Ausnehmung mittels der Schlitten (15, 16, 17) und dem Antriebsmotor des Schneidkopfhalters (9) führt.

8. Bearbeitungsvorrichtung (1) nach einem der Ansprüche 1 bis 7,
**dadurch gekennzeichnet,**
**dass** die Zuführung des Schweißdrahtes (11) von einer Vorratsrolle (12) bis zum Schneidkopf (3, 54) erfolgt, und/oder dass der Schweißdraht (11) durch einen Schlitz des Schneidkopfes (3, 54) hindurch geführt und hinter der Drahtpflugschneide (8, 55) unmittelbar in die eingepflügte Nut eingedrückt wird.

9. Bearbeitungsvorrichtung (1) nach einem der Ansprüche 1 bis 8,
**dadurch gekennzeichnet,**
**dass** hinter der Drahtpflugschneide (8, 55) ein Führungselement aus dem Schneidkopf (3, 54) herausragt, welches zur Führung des Schweißdrahtes (11) vorgesehen ist und beispielsweise aus einem Federstahl besteht und/oder dass das Führungselement in Richtung auf den Schweißdraht (11) und die Drahtpflugschneide (8, 55) eine Krümmung aufweist.

10. Bearbeitungsvorrichtung (1) nach einem der Ansprüche 1 bis 9,
**dadurch gekennzeichnet,**
**dass** die Andruckkraft des Schneidkopfes (3, 54) auf die Rohrwandung in Abhängigkeit des Abstandes von der Rohrwandung über einen Korrekturfaktor festlegbar ist, oder dass der Schneidkopf (3, 54) mit einem Drucksensor ausgestattet ist und die Andruckkraft des Schneidkopfes (3, 54) durch die Steuerungseinheit (31) regelbar ist.

11. Bearbeitungsvorrichtung (1) nach einem der Ansprüche 1 bis 10,
**dadurch gekennzeichnet,**
**dass** eine Klemmvorrichtung (2) für die Rohrenden (5, 52) vorgesehen ist, wobei die Klemmvorrichtung (2) unterschiedliche Rohrdurchmesser aufnehmen und mit radial verstellbarer Spannbacken einklemmt oder dass die Klemmvorrichtung (2) für unterschiedlich Rohrdurchmesser austauschbare Klemmbacken aufweist.

12. Bearbeitungsvorrichtung (1) nach einem der Ansprüche 1 bis 11,
**dadurch gekennzeichnet,**
**dass** diese mit zumindest einem Fräskopf (36) ausgestattet ist, welcher zum Planfräsen der Stirnfläche (10) und zum Einfräsen einer Ausnehmung auf der Innen- oder Außenseite des Rohrendes (5) vorgesehen ist.

13. Bearbeitungsvorrichtung (1) nach einem der Ansprüche 1 bis 12,
**dadurch gekennzeichnet,**
**dass** diese mit einem Fräskopf (36) oder einem Bohrer ausgestattet ist, um zwei Radialbohrungen vorzunehmen, durch welche die Schweißdrahtenden nach außen führbar sind.

14. Verfahren zur Bearbeitung eines Rohrendes (5) durch eine Bearbeitungsvorrichtung, umfassend zumindest einen Schneidkopf (3, 54), welcher über eine Steuerungseinheit (31) in einem Koordinatensystem bewegt wird, wobei der Schneidkopf (3, 54) eine Drahtpflugschneide (8, 55) aufweist,
welche entlang der Innen- oder Außenwandung eines feststehenden Rohrendes (5, 52) bewegt wird und wobei die Drahtpflugschneide (8, 55) in einem Arbeitsgang bis zu einer einstellbaren Tiefe radial in das Kunststoffmaterial des Rohrendes (5, 52) eindringt und das Kunststoffmaterial aufpflügt, einen zugeführten Schweißdraht (11) eindrückt und über ein Andruckelement die Nut mit dem aufgepflügten Kunststoffmaterial wieder verschließt, wobei der Schneidkopf (3, 54) auf einem um 360° drehbaren Schneidkopfhalter (9) gelagert ist, welcher eine radiale Ausrichtung der Drahtpflugschneide (8, 55) senkrecht zur Innen- oder Außenwandung bei einer Bewegung des Schneidkopfes (4, 54) vornimmt,
**dadurch gekennzeichnet,**
**dass** die Bearbeitungsvorrichtung in einer Drehrichtung zumindest drei voneinander beabstandete Nuten einpflügt, den Schweißdraht (11) eindrückt und gleichzeitig die Nuten wieder verschließt, wobei nach Vollendung der letzten Umdrehung ein Richtungswechsel mit einer Drehung des Schneidkopfes (3, 54) durch einen Drehpunkt der Drahtpflugschneide (8, 55) in Schneidrichtung vor der Drahtpflugschneide (8, 55) oder durch einen Antriebsmotor erfolgt und der Schneidkopf (3, 54) in entgegengesetzter Drehrichtung wiederum zwischen den vorherigen Nuten weitere Nuten einfräst, den Schweißdraht (11) eindrückt und die Nut wieder verschließt.

## Claims

1. Processing device (1) for a tube end (5, 52) for ploughing-in a welding wire (11), comprising at least one cutter head (3, 54) which is movable within a coordinate system via a controller (31), wherein the cutter head (3, 54) comprises a wire plough edge (8, 55) which is movable along the inner or outer wall of a stationary tube end (5, 52), and the wire plough edge (8, 55) radially penetrates into the plastic material of the tube end (5, 52) down to an adjustable depth in one processing step and ploughs open the plastic material, presses in a supplied welding wire (11), and reseals the groove with the ploughed-open plastic material via a pressure element, wherein the cutter head (3, 54) is mounted on a cutter head holder (9) rotatable about 360° which performs a radial orientation of the wire plough edge (8, 55) perpendicular to the inner or outer wall during a movement of the cutter head (4, 54),
**characterized in that**
the wire plough edge (8, 55) is mounted in a plane to be rotatable about 360 degrees, wherein the centre of motion of the wire plough edge (8) is located in front of the wire plough edge (8) in the cutting direction, or the cutter head (54) with the wire plough edge (55) being rotatably mounted is movable in the ploughing direction about 360 degrees by means of at least one drive motor, wherein the centre of motion is located in the centre of the wire plough edge (8, 55).

2. Processing device (1) according to claim 1, **characterized in that** the cutter head (3, 54) comprises, as a pressure element, a pressure roller, a guide shoe or a crowned end which presses the ploughed-open plastic material into the groove together with the wire.

3. Processing device (1) according to claim 1 or 2, **characterized in that** the cutter head (3, 54) comprises two surfaces disposed in a V-shape to form a wire plough edge (8, 55), and a slot for the welding wire (11).

4. Processing device (1) according to claim 1 or 3, **characterized in that** the movement of the cutter head (3, 54) is performed via the controller (31) by means of at least three slides (15, 16, 17) of which at least one first (15) and second slides (17) are movable at right angles with respect to each other horizontally, and at least one third slide (16) is movable vertically, or that the movement of the cutter head (3, 54) is performed via the controller (31) by means of a robot which comprises, as a multi-axis robot, at least one rotational and one translational degree of freedom.

5. Processing device (1) according to claim 1 or 4, **characterized in that** the cutter head holder (9) performs, directly via a drive motor or indirectly via a drive motor with a transmission, a radial orientation of the cutter head (3, 54) with respect to the wall of the tube end (5, 52).

6. Processing device (1) according to any one of claims 1 to 5, **characterized in that** the cutter head holder (9) consists of a hollow cylinder, and/or that the cutter head (3, 54) is mounted on the cutter head holder (9) via a pivot bearing.

7. Processing device (1) according to any one of claims 1 to 6, **characterized in that** the controller (31) guides the cutter head (3) with the wire plough edge (8) along the inner or outer wall of the created recess by means of the slides (15, 16, 17) and the drive motor of the cutter head holder (9).

8. Processing device (1) according to any one of claims 1 to 7, **characterized in that** the supply of the welding wire (11) is effected from a supply roll (12) to the cutter head (3, 54), and/or that the welding wire (11) is guided through a slot of the cutter head (3, 54) and is pressed directly into the ploughed-in groove behind the wire plough edge (8, 55).

9. Processing device (1) according to any one of claims 1 to 8, **characterized in that** behind the wire plough edge (8, 55), a guide element projects from the cutter head (3, 54) which is provided for guiding the welding wire (11) and consists, for example, of spring steel, and/or the guide element has a curvature in the direction towards the welding wire (11) and the wire plough edge (8, 55).

10. Processing device (1) according to any one of claims 1 to 9, **characterized in that** the pressure force of the cutter head (3, 54) onto the tube wall is determinable in response to the distance from the tube wall via a correction factor, or the cutter head (3, 54) is equipped with a pressure sensor and the pressure force of the cutter head (3, 54) is controllable by the controller (31).

11. Processing device (1) according to any one of claims 1 to 10, **characterized in that** a clamping device (2) is provided for the tube ends (5, 52), wherein the clamping device (2) may receive different tube diameters and clamp them with radially adjustable clamping jaws, or the clamping device (2) comprises exchangeable clamping jaws for different tube diameters.

12. Processing device (1) according to any one of claims 1 to 11, **characterized in that** it is equipped with at least one milling head (36) which is provided for face milling the front face (10) and for milling a recess on the inner or outer side of the tube end (5).

13. Processing device (1) according to any one of claims 1 to 12, **characterized in that** it is equipped with a milling head (36) or a drill bit to perform two radial bores through which the welding wire ends can be guided to the outside.

14. Method for processing a tube end (5) by a processing device, comprising at least one cutter head (3, 54) which is moved within a coordinate system via a controller (31), wherein the cutter head (3, 54) comprises a wire plough edge (8, 55) which is moved along the inner or outer wall of a stationary tube end (5, 52), and wherein the wire plough edge (8, 55) radially penetrates into the plastic material of the tube end (5, 52) down to an adjustable depth in one processing step and ploughs open the plastic material, presses in a supplied welding wire (11) and reseals the groove with the ploughed-open plastic material via a pressure element, wherein the cutter head (3, 54) is mounted on a cutter head holder (9) rotatable about 360° which performs a radial orientation of the wire plough edge (8, 55) perpendicular to the inner or outer wall during a movement of the cutter head (4, 54),
**characterized in that**
the processing device ploughs in, in one sense of rotation, at least three spaced-apart grooves, presses in the welding wire (11) and simultaneously reseals the grooves, wherein after completion of the last rotation, a change of direction is effected with a rotation of the cutter head (3, 54) by a centre of motion of the wire plough edge (8, 55) in the cutting direction in front of the wire plough edge (8, 55) or by a drive motor, and the cutter head (3, 54) mills further grooves between the previous grooves in the opposite sense of rotation, presses in the welding wire (11) and reseals the groove.

## Revendications

1. Dispositif d'usinage (1) d'une extrémité de tube (5, 52) pour l'enfouissement d'un fil de soudure (11), comprenant au moins une tête de coupe (3, 54) qui peut être déplacée dans un système de coordonnées par l'intermédiaire d'une unité de commande (31), dans lequel la tête de coupe (3, 54) présente une lame de charrue à fil (8, 55) qui peut être déplacée le long de la paroi intérieure ou extérieure d'une extrémité de tube fixe (5, 52) et la lame de charrue à fil (8, 55), en une seule opération, pénètre radialement dans la matière plastique de l'extrémité de tube (5, 52) jusqu'à une profondeur réglable et creuse la matière plastique, enfonce un fil de soudure amené (11) et referme la rainure avec la matière plastique creusée au moyen d'un élément de pression, dans lequel la tête de coupe (3, 54) est montée sur un support de tête de coupe (9) pouvant tourner sur 360°, qui effectue une orientation radiale de la lame de charrue à fil (8, 55) perpendiculairement à la paroi intérieure ou extérieure lorsque la tête de coupe (4, 54) est déplacée,
**caractérisé en ce**
**que** la lame de charrue à fil (8, 55) est montée de manière à pouvoir tourner sur 360 degrés dans un plan, le centre de rotation de la lame de charrue à fil (8) étant situé devant la lame de charrue à fil (8) dans le sens de coupe, ou que la tête de coupe (54) avec la lame de charrue à fil (55), montée de manière à pouvoir tourner sur 360 degrés, peut être déplacée dans le sens de coupe au moyen d'au moins un moteur d'entraînement, le centre de rotation étant situé au centre de la lame de charrue à fil (8, 55).

2. Dispositif d'usinage (1) selon la revendication 1,
**caractérisé en ce**
**que** la tête de coupe (3, 54) présente un rouleau de pression, un patin glissant ou une extrémité bombée comme élément de pression qui presse la matière plastique creusée en même temps que le fil dans la rainure.

3. Dispositif d'usinage (1) selon la revendication 1 ou 2,
**caractérisé en ce**
**que** la tête de coupe (3, 54) présente deux surfaces disposées en forme de V pour former une lame de charrue à fil (8, 55) et une fente pour le fil de soudure (11).

4. Dispositif d'usinage (1) selon la revendication 1 ou 3,
**caractérisé en ce**
**que** le déplacement de la tête de coupe (3, 54) par l'intermédiaire de l'unité de commande (31) s'effectue à l'aide d'au moins trois chariots (15, 16, 17), dont au moins un premier (15) et un deuxième (17) peuvent être déplacés horizontalement à angle droit l'un par rapport à l'autre et au moins un troisième chariot (16) peut être déplacé verticalement, ou que le déplacement de la tête de coupe (3, 54) par l'intermédiaire de l'unité de commande (31) s'effectue à l'aide d'un robot qui, sous la forme d'un robot multi-axes, présente au moins un degré de liberté en rotation et un degré de liberté en translation.

5. Dispositif d'usinage (1) selon la revendication 1 ou 4,
**caractérisé en ce**
**que** le support de tête de coupe (9) effectue, directement par l'intermédiaire d'un moteur d'entraînement ou indirectement par l'intermédiaire d'un moteur d'entraînement avec une transmission, une orientation radiale de la tête de coupe (3, 54) par rapport à la paroi de l'extrémité de tube (5, 52).

6. Dispositif d'usinage (1) selon l'une des revendications 1 à 5,
**caractérisé en ce**
**que** le support de tête de coupe (9) est constitué d'un cylindre creux et/ou que la tête de coupe (3, 54) est montée sur le support de tête de coupe (9) par l'intermédiaire d'un palier de pivotement.

7. Dispositif d'usinage (1) selon l'une des revendications 1 à 6,
**caractérisé en ce**
**que** l'unité de commande (31) guide la tête de coupe (3) avec la lame de charrue à fil (8) le long de la paroi intérieure ou extérieure de l'évidement produit au moyen des chariots (15, 16, 17) et du moteur d'entraînement du support de tête de coupe (9).

8. Dispositif d'usinage (1) selon l'une des revendications 1 à 7,
**caractérisé en ce**
**que** le fil de soudure (11) est amené d'un rouleau d'alimentation (12) à la tête de coupe (3, 54) et/ou que le fil de soudure (11) est guidé à travers une fente de la tête de coupe (3, 54) et enfoncé directement dans la rainure creusée derrière la lame de charrue à fil (8, 55).

9. Dispositif d'usinage (1) selon l'une des revendications 1 à 8,
**caractérisé en ce**
**que** derrière la lame de charrue à fil (8, 55), un élément de guidage dépasse de la tête de coupe (3, 54), lequel est prévu pour guider le fil de soudure (11) et est constitué, par exemple, d'un acier à ressort et/ou que l'élément de guidage présente une courbure en direction du fil de soudure (11) et de la lame de charrue à fil (8, 55).

10. Dispositif d'usinage (1) selon l'une des revendications 1 à 9,
**caractérisé en ce**
**que** la force de pression de la tête de coupe (3, 54) sur la paroi de tube peut être déterminée au moyen d'un facteur de correction en fonction de la distance par rapport à la paroi de tube, ou que la tête de coupe (3, 54) est équipée d'un capteur de pression et que la force de pression de la tête de coupe (3, 54) peut être réglée par l'unité de commande (31).

11. Dispositif d'usinage (1) selon l'une des revendications 1 à 10,
**caractérisé en ce**
**qu'**il est prévu un dispositif de serrage (2) pour les extrémités de tubes (5, 52), le dispositif de serrage (2) recevant différents diamètres de tubes et les serrant avec des mâchoires de serrage réglables radialement, ou que le dispositif de serrage (2) présente des mâchoires de serrage interchangeables pour différents diamètres de tubes.

12. Dispositif d'usinage (1) selon l'une des revendications 1 à 11,
**caractérisé en ce**
**qu'**il est équipé d'au moins une tête de fraisage (36) qui est prévue pour le surfaçage de la face frontale (10) et pour le fraisage d'un évidement du côté intérieur ou extérieur de l'extrémité de tube (5).

13. Dispositif d'usinage (1) selon l'une des revendications 1 à 12,
**caractérisé en ce**
**qu'**il est équipé d'une tête de fraisage (36) ou d'un foret pour réaliser deux trous radiaux à travers lesquels les extrémités du fil de soudure peuvent être guidées vers l'extérieur.

14. Procédé d'usinage d'une extrémité de tube (5) par un dispositif d'usinage comprenant au moins une tête de coupe (3, 54) qui est déplacée dans un système de coordonnées par l'intermédiaire d'une unité de commande (31), dans lequel la tête de coupe (3, 54) présente une lame de charrue à fil (8, 55) qui est déplacée le long de la paroi intérieure ou extérieure d'une extrémité de tube fixe (5, 52) et dans lequel la lame de charrue à fil (8, 55), en une seule opération, pénètre radialement dans la matière plastique de l'extrémité de tube (5, 52) jusqu'à une profondeur réglable et creuse la matière plastique, enfonce un fil de soudure amené (11) et referme la rainure avec la matière plastique creusée au moyen d'un élément de pression, dans lequel la tête de coupe (3, 54) est montée sur un support de tête de coupe (9) pouvant tourner sur 360°, qui effectue une orientation radiale de la lame de charrue à fil (8, 55) perpendiculairement à la paroi intérieure ou extérieure lorsque la tête de coupe (4, 54) est déplacée,
**caractérisé en ce**
**que** le dispositif d'usinage creuse au moins trois rainures espacées les unes des autres dans un sens de rotation, enfonce le fil de soudure (11) et referme en même temps les rainures, dans lequel, après achèvement du dernier tour, un changement de sens avec une rotation de la tête de coupe (3, 54) a lieu par un centre de rotation de la lame de charrue à fil (8, 55) situé devant la lame de charrue à fil (8, 55) dans le sens de coupe ou par un moteur d'entraînement, et la tête de coupe (3, 54), dans le sens de rotation inverse, fraise à nouveau d'autres rainures entre les rainures précédentes, enfonce le fil de soudure (11) et referme la rainure.
